Europäisches Patentamt

European Patent Office

Office européen des brevets

(19)

(11) **EP 1 516 905 A2**

(12) **EUROPEAN PATENT APPLICATION**

(43) Date of publication:
23.03.2005 Bulletin 2005/12

(51) Int Cl.7: **C09K 11/08**, G21K 4/00

(21) Application number: 04021857.0

(22) Date of filing: 15.09.2004

(84) Designated Contracting States:
**AT BE BG CH CY CZ DE DK EE ES FI FR GB GR HU IE IT LI LU MC NL PL PT RO SE SI SK TR**
Designated Extension States:
**AL HR LT LV MK**

(30) Priority: 22.09.2003 JP 2003329587
22.09.2003 JP 2003329604

(71) Applicant: **Konica Minolta Medical & Graphic Inc. Tokyo 163-0512 (JP)**

(72) Inventors:
• **Kasai, Shigetami**
**Hino-shi, Tokyo, 191-8511 (JP)**
• **Shibuya, Hideki**
**Hino-shi, Tokyo, 191-8511 (JP)**
• **Nakano, Kuniaki**
**Hino-shi, Tokyo, 191-8511 (JP)**

(74) Representative:
**Gille Hrabal Struck Neidlein Prop Roos**
**Patentanwälte**
**Brucknerstrasse 20**
**40593 Düsseldorf (DE)**

(54) **Radiation image conversion panel and preparation method thereof**

(57) A radiation image conversion panel is disclosed, comprising a support having thereon a stimulable phosphor layer comprising columnar crystals of a stimulable phosphor, wherein the columnar crystals are isotropically distributed on the support outwardly from the center of the support with respect to columnar crystal diameter. There is also disclosed a preparation method thereof.

EP 1 516 905 A2

# EP 1 516 905 A2

**Description**

**FIELD OF THE INVENTION**

The present invention relates to a radiation image conversion panel comprising a stimulable phosphor layer and a preparation method thereof.

**BACKGROUND OF THE INVENTION**

Radiation images as represented by X-ray images are broadly employed for use in medical diagnosis. To obtain the radiation images, there has been practically used a radiation image recording and reproducing method using photo-stimulable phosphors (hereinafter, also denoted as stimulable phosphors) in which irradiated radiation energy is accumulated and recorded, and stimulated emission is caused upon exposure to stimulating light in proportion to the accumulated and recorded energy.

A radiation image conversion panel used for the radiation image recording and reproducing method is basically comprised of a support provided thereon with a stimulable phosphor layer. Of stimulable phosphors is known one which is comprised of columnar form crystals formed by a process of gas phase growth (deposition). Specifically, the stimulable phosphor layer, formed of columnar crystals, prevents traverse diffusion of stimulated emission light (or photostimulated luminescence), i.e., the light reaches the support surface after repeated reflection at the interface of cracks (or columnar crystals), thereby leading to markedly enhanced sharpness of images formed by the stimulated luminescence. For example, JP-A No. 2-58000 (hereinafter, the term, "JP-A" refers to an unexamined Japanese Patent Application Publication) proposes a radiation image conversion panel comprising a support having a stimulable phosphor layer of columnar crystals formed by a gas phase deposition process and inclined at a prescribed angle to the direction normal to the support.

**SUMMARY OF THE INVENTION**

However, even in radiation image conversion panels comprising a stimulable phosphor layer of columnar crystals formed by a gas phase growth process (deposition), the relationship of luminance and sharpness has not achieved sufficient characteristics and requires further improvement. For example, in conventional radiation image conversion panels (such as disclosed in the foregoing patent document), although sufficient studies have been made with respect to the crystal form, the distribution of crystal diameters has not been studied and a non-uniform distribution of crystal diameters produced problems such as unevenness in sensitivity.

Further in cases when forming a stimulable phosphor layer by depositing a stimulable phosphor by a process of gas phase deposition, a stimulable phosphor layer comprised of CsBr and the like exhibits a relatively high thermal expansion coefficient but results in a residual stress at the time of vapor deposition onto the support, producing problems such as warping of the stimulable phosphor layer. The thus warped phosphor layer affects the refraction index, deteriorating optical characteristics and resulting in image unevenness. In addition, warping often lowered shock resistance.

Accordingly, it is an object of this invention to provide a radiation image conversion panel with minimized warping and enhanced shock resistance as well as enhanced sensitivity.

Thus, in one aspect this invention is directed to a radiation image conversion panel comprising on a support a phosphor layer comprising columnar phosphor crystals which are formed by a process of gas phase deposition, wherein the columnar crystals is isotropically distributed outwardl from the center of a substrate of the phosphor layer.

In another aspect this invention is directed to a radiation image conversion panel comprising on a support a phosphor layer comprising columnar phosphor crystals which are formed by a process of gas phase deposition, wherein a coefficient of variation of columnar crystal diameters is not more than 50%.

Further, in another aspect this invention is directed to a method of preparing a radiation image conversion panel as described above, wherein the method comprises forming a phosphor layer on a support by a process of gas phase deposition using a vacuum deposition apparatus equipped with a vacuum vessel having a support rotation mechanism and a evaporation source to form columnar phosphor crystals on the support.

According to this invention, in a radiation image conversion panel having a phosphor layer comprising columnar crystals formed by the process of gas phase deposition, the distribution characteristic of crystal diameters becomes isotropic, whereby heat or stress is isotropically and evenly applied, resulting in reduced warping and enhanced shock resistance. Further, even distribution of crystal diameters within the phosphor layer can also minimize unevenness of sensitivity. Thereby, radiation images exhibiting superior image quality such as sharpness can be provided.

## BRIEF EXPLANATION OF THE DRAWINGS

Fig. 1 is a sectional view showing constitution of a radiation image conversion panel.
Figs. 2 and 3 illustrate vacuum deposition apparatuses.
Figs. 4(a), 4(b) and 4(c) illustrate distribution characteristics of columnar crystal diameters.

## DETAILED DESCRIPTION OF THE INVENTION

Next, embodiments of this invention will be detailed with reference to illustrations, but the scope of this invention is not limited to these exemplified illustrations.

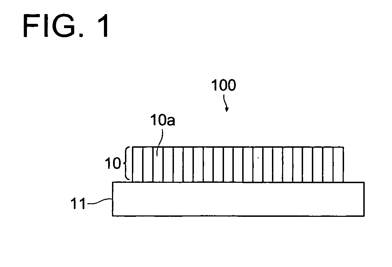

As shown in Fig. 1, a radiation image conversion panel (100) according to the embodiment comprises a support (11) provided thereon with a stimulable phosphor layer (10) comprised of columnar crystals (10a) which have been formed by the process of gas phase deposition, and further thereon, a protective layer may optionally be provided.

The support (11) can be chosen optionally from materials known as a support for conventional radiation image conversion panels and a quartz glass sheet, a sheet of metal such as aluminum, iron, tin or chromium and carbon fiber reinforced resin sheets are preferred as a support for the phosphor layer formed by gas phase deposition.

The support (11) preferably has a resin layer to smooth the surface thereof. The resin layer preferably contains a compound such as polyimide, polyethylene terephthalate, paraffin or graphite. The thickness thereof preferably is ca. 5 μm to 50 μm. The resin layer may be provided on the phosphor layer side, on the opposite side or on both sides of the support. Means for providing the resin layer on the support (11) include, for example, a lamination method and a coating method. Lamination is conducted using a heated pressure roller, and the heating temperature preferably is 80 to 150 °C, the pressure preferably is $4.90 \times 10$ to $2.94 \times 10^2$ N/cm and the transporting rate preferably is 0.1 to 2.0 m/ sec.

As shown in Fig. 1, the radiation image conversion panel (100) comprises a support (11) having thereon a stimulable phosphor layer (10) comprised of columnar crystals (10a) which have been formed by the process of gas phase deposition, and the columnar crystals formed on the support exhibit an isotropic distribution of diameters of the columnar crystals (hereinafter, also denoted simply as columnar crystal diameters) from the center of the support (or substrate) having the phosphor layer. Thus, the columnar crystals, which are formed on the support to form a stimulable phosphor layer, are isotropically distributed outwardly from the center of the support, with respect to columnar crystal diameters. In one preferred embodiment of this invention, the coefficient of variation of columnar crystal diameters is not more than 50%, more preferably not more than 40%, still more preferably not more than 30%, further still more preferably not more than 20%, and specifically preferably not more than 10%.

The columnar crystal diameter refers to the diameter of a circle having an area equivalent to the section of the columnar crystal when observing the respective columnar crystals from the direction perpendicular to the support. The coefficient of variation of columnar crystal diameters is represented by the standard deviation of columnar crystal diameter divided by the average columnar crystal diameter. The coefficient of variation of columnar crystal diameters can be determined by electron-microscopic observation from an electron-micrograph including at least 100 columnar crystals in the field of view. The columnar crystal diameter is affected by factors such as temperature of a support, the degree of vacuum and the vapor stream-incident angle and the like, and columnar crystals having intended diameters can formed by controlling these factors.

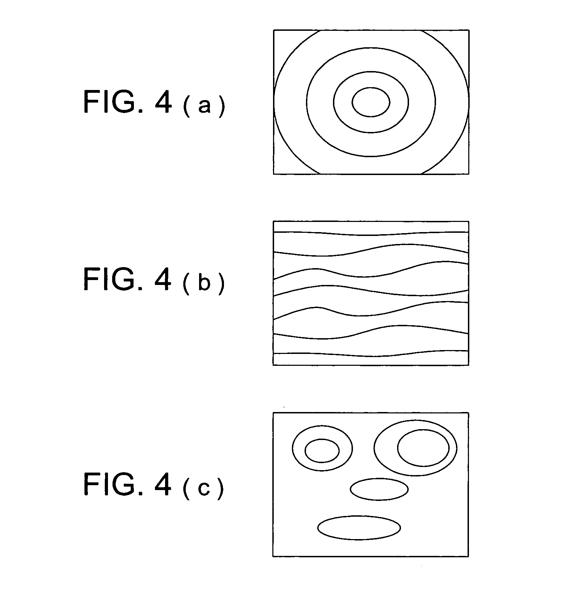

The foregoing expression, the columnar crystals formed on the support being isotropically distributed outwardly from the center of the support with respect to columnar crystal diameters (or the distribution of columnar crystal diameters being isotropic) means that when concentric circles are drawn from the center of the substrate, as shown in Fig. 4(a), the columnar crystal diameter is substantially constant on the circumference of a circle which is at an equal distance from the center of the substrate. In such cases when the columnar crystal diameter is constant in a stripe form from the end of the substrate, as shown in Fig. 4(b), or when the columnar crystal diameter is constant on the circle of plural groups of concentric circles, as shown in Fig. 4(c), the distribution of columnar crystal diameters is not isotropic but it is defined to be anisotropic in this invention.

In the case of the columnar crystals being isotropically distributed outwardly from the center of the support with respect to columnar crystal diameters, the diameter may be constant, or increase or decrease in the radial direction from the center. This can be proved by making electron-microscopic observation of at least 20 measuring points in the radial direction.

The stimulable phosphor layer preferably contains a stimulable phosphor represented by the following formula (1):

$$M^1X \cdot aM^2X'_2 \cdot bM^3X''3 : eA \qquad (1)$$

wherein $M^1$ represents an alkali metal selected from the group consisting of Li, Na, K, Rb and Cs; $M^2$ represents a divalent metal selected from the group consisting of Be, Mg, Ca, Sr, Ba, Zn, Cd, Cu and Ni; $M^3$ represents a trivalent metal atom selected from the group consisting of Sc, Y, La, Ce, Pr, Nd, Pm, Sm, Eu, Gd, Tb, Dy, Ho, Er, Tm, Yb, Lu, Al, Ga and In; X, X' and X" each represent a halogen atom selected from the group consisting of F, Cl, Br and I; A represents a metal selected from the group consisting of Eu, Tb, In, Ce, Tm, Dy, Pr, Ho, Nd, Yb, Er, Gd, Lu, Sm, Y, Tl, Na, Ag, Cu and Mg; a, b and e are respectively $0 \le a < 0.5$, $0 \le b < 0.5$ and $0 < e < 1.0$.

In the stimulable phosphor represented by the foregoing formula (1), $M^1$ is an alkali metal selected from the group consisting of Li, Na, K, Rb and Cs, preferably an alkali metal selected from the group consisting of Rb and Cs, and more preferably Cs atom.

$M^2$ is a divalent metal selected from the group consisting of Be, Mg, Ca, Sr, Ba, Zn, Cd, Cu and Ni; and preferably a divalent metal selected from the group consisting of Be, Mg, Ca, Sr and Ba.

$M^3$ is a trivalent metal atom selected from the group consisting of Sc, Y, La, Ce, Pr, Nd, Pm, Sm, Eu, Gd, Tb, Dy, Ho, Er, Tm, Yb, Lu, Al, Ga and In; and preferably a trivalent metal atom selected from the group consisting of Y, Ce, Sm, Eu, Al, La, Gd, Lu, Ga and In.

A is a metal selected from the group consisting of Eu, Tb, In, Ce, Tm, Dy, Pr, Ho, Nd, Yb, Er, Gd, Lu, Sm, Y, Tl, Na, Ag, Cu and Mg; of these, Eu atom is preferred.

X, X' and X" each represent a halogen atom selected from the group consisting of F, Cl, Br and I; a halogen atom selected from the group consisting of F, Cl and Br is preferred and Br atom is more preferred.

In the foregoing formula (1), b is $0 \le b < 0.5$ and preferably $0 \le b < 10^{-2}$.

Stimulable phosphors of the foregoing formula (1) can be prepared from the following raw materials (a) to (c) according to the procedure described below:

(a) one or more compounds selected from NaF, NaCl, NaBr, NaI, KF, KCl, KBr, KI, RbF, RBCl, RbBr, RbI, CsF, CsCl, CsBr, and CsI is usable;

(b) one or more compounds selected from $MgF_2$, $MgCl_2$, $MgBr_2$, $MgI_2$, $CaF_2$, $CaCl_2$, $CaBr_2$, $CaI_2$, $SrF_2$, $SrCl_2$, $SrBr_2$, $SrI_2$, $BaF_2$, $BaCl_2$, $BaBr_2$, $BaBr_2 \cdot 2H_2O$, $BaI_2$, $ZnF_2$, $ZnCl_2$, $ZnBr_2$, $ZnI_2$, $CdF_2$, $CdCl_2$, $CdBr_2$, $CdI_2$, $CuF_2$, $CuCl_2$, $CuBr_2$, $CuI_2$, $NiF_2$, $NiCl_2$, $NiBr_2$ and $NiI_2$ is usable;

(c) Sc, Y, La, Ce, Pr, Nd, Pm, Sm, Eu, Gd, Tb, Dy, Ho, Er, Tm, Yb, Lu, Al, Ga and In.

The foregoing phosphor raw materials are weighed so as to have a mixture composition falling within the foregoing numerical range, and then dissolved. In this regard, there may be conducted sufficient mixing using a mortar, ball mill or mixer mill. Then, a prescribed amount of an acid is added to adjust pH value (C) of the thus obtained solution so as to fall within the range of $0 < C < 7$, and then any water is vaporized.

Further, the obtained raw material mixture is charged into a heat-resistant vessel such as a silica crucible or an alumina crucible and then placed in an electric furnace to be calcined. The calcination temperature preferably is 500 to 1000 °C. The calcination time, depending on the charged amount of raw materials, calcination temperature and the like, preferably is 0.5 to 6 hrs.

As a calcinations atmosphere is employed a weakly reducible atmosphere such as a nitrogen gas atmosphere containing a small amount of hydrogen gas or a carbon dioxide atmosphere containing carbon monoxide, a nitrogen gas atmosphere, a neutral atmosphere such as an argon gas atmosphere, or a trace amount of oxygen-introduced weakly oxidizing atmosphere.

After completion of calcination under the foregoing condition, calcined material is taken out of the electric furnace and pulverized. Thereafter, powdered calcined material may again be charged into a heat resistant vessel and then placed in an electric furnace to recalcined under the foregoing condition to further enhance emission luminance of the phosphor. When the calcined material is allowed to cool from the calcination temperature to room temperature, the intended phosphor can be obtained by taking out the calcined material from an electric furnace and allowing it to stand in an aerial atmosphere. In this regard, the calcined material may also be cooled in the same atmosphere as in the calcination, such as a weakly reducing atmosphere or neutral atmosphere. Alternatively, the calcined material is moved from a heating section to a cooling section within the electric furnace, followed by being rapidly cooled in a weakly reducing atmosphere, neutral atmosphere or weakly oxidizing atmosphere, thereby leading to further enhanced stimulated emission luminance of the phosphor.

The stimulable phosphor layer can be formed by gas phase deposition. Examples of the gas phase deposition process include a vacuum deposition (or vacuum evaporation) method, a sputter deposition method, a CVD method, an ion plating method and other appropriate methods. Of these, the vacuum deposition method is preferred in this invention.

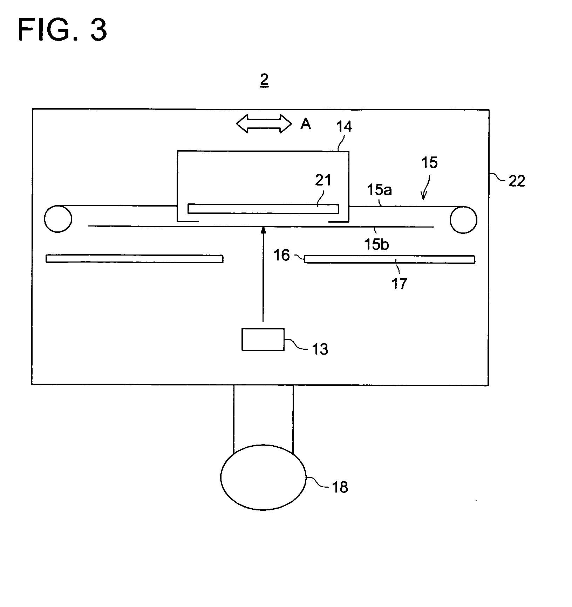

Vacuum deposition can be performed using, for example, the vacuum deposition apparatus (1) shown in Fig. 3. The vacuum deposition apparatus (1) is provided with a vacuum vessel (12) and a vacuum pump (6) to evacuate the interior of the vacuum vessel (12) and to introduce atmospheric air; the interior of the vacuum vessel (12) is provided with an evaporation source (3) to deposit vapor onto a support, a support holder (4) to hold the support (11) and a support rotation mechanism (5) to allow the support holder (4) to rotate to the evaporation source (3).

To hold a stimulable phosphor and heat it by a resistance heating method, the evaporation source (3) may be composed of aluminum crucible wound by a heater, or a boat or a heater of a high-melting metal. Besides the resistance heating method, electron beam heating or high-frequency induction heating is also applicable to heat a stimulable phosphor. Specifically, the resistance heating is preferred in terms of having a relatively simple constitution, ease of handling and low price, and being applicable to a large number of materials. Further, the evaporation source (3) may be a molecular beam source using a molecular source epitaxial method.

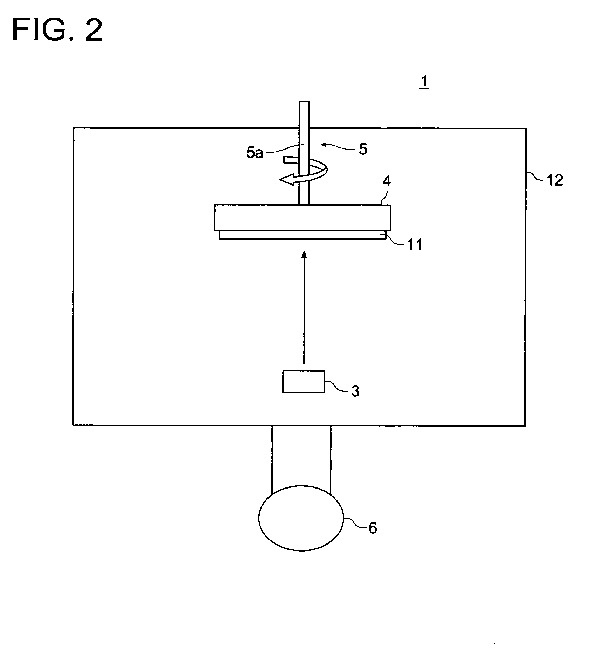

The support rotation mechanism (5) is composed of, for example, a rotating shaft (5a) which rotates a support holder (4) while holding the support holder (4) and a motor (not shown in Fig. 2) which is arranged outside the vacuum vessel (2) and acts as a driving source for the rotating shaft. Specifically, to form columnar crystals exhibiting an isotropical distribution of diameters on a support, it is preferred to conduct deposition while rotating the support.

The support holder (4) is preferably provided with a heater to heat the support (11). Heating the surface of the support (11) can separate or remove material adsorbed onto the support surface, prevent generation of an impurity layer between the support surface and the stimulable phosphor, promote closer contact and optimize film characteristics of the stimulable phosphor layer.

There may be provided a shutter between the support (11) and the evaporation source (3) to shield the space of from the evaporation source (3) to the support (11). Providing the shutter prevents unintended material adhering onto the stimulable phosphor surface being evaporated at the initial stage of evaporation and its adherence to the support (11).

Using the vacuum deposition apparatus (1) described above, a stimulable phosphor layer (12) can be formed on a support (11), according to the following procedure. First, the support (11) is mounted on the support holder (4). Then, the interior of the vacuum vessel is evacuated and regulated to the intended degree of vacuum. Thereafter, the support holder is rotated toward the evaporation source (3) by the support rotation mechanism (5). When the vacuum vessel reaches the degree of vacuum allowing deposition, a stimulable phosphor is evaporated from the heated evaporation source (3) and deposits on the surface of the support (11) to grow the phosphor to the intended thickness. In this regard, the distance between the support (11) and the evaporation source (3) preferably is 100 mm to 1500 mm to form columnar crystals exhibiting an isotropical distribution of diameters on a support. It is further preferred to maintain the degree of vacuum at a pressure of $1 \times 10^{-4}$ Pa to 1 Pa.

The foregoing deposition process may be divided to plural times to form a stimulable phosphor layer (12). Further, using plural resistance heaters or electron beams in the deposition process, co-deposition can be performed to form the stimulable phosphor layer (12) concurrently with synthesis of an intended stimulable phosphor on the support (11). The substrate [such as support (11), protective layer or an interlayer] may optionally be cooled or heated during deposition. After completion of the deposition, the stimulable phosphor layer (12) may optionally be heated. Further, there may be conducted vacuum deposition in which gases such as $O_2$ or $H_2$ are introduced during deposition.

The thickness of the stimulable phosphor layer (12), depending on the objective of a radiation image conversion panel or the kind of a stimulable phosphor, is preferably 50 to 2000 μm, more preferably 50 to 1000 μm, and still more preferably 100 to 800 μm to achieve the effects of this invention. In the formation of the stimulable phosphor layer (12) through gas-phase deposition, the support is preferably maintained at a temperature of from room temperature (rt) to 300 °C, and more preferably 50 to 200 °C during the formation of the stimulable phosphor layer (12).

After formation of the stimulable phosphor layer (12), as described above, a protective layer may optionally be provided on a side of the stimulable phosphor layer (12) opposite the support (11) which physically or chemically protects the stimulable phosphor layer (12). The protective layer may be formed by coating a coating solution as a protective layer on the surface of the stimulable phosphor layer (12) or by allowing a protective layer previously formed to adhere onto the stimulable phosphor layer (12). Materials used for the protective layer include those which are typically used for protective layers. Examples thereof include cellulose acetate, nitrocellulose, polymethyl methacrylate, polyvinyl butyral, polyvinyl formal, polycarbonate, polyester, polyethylene terephthalate, polyethylene, polyvinylidene chloride, nylon, polytetrafluoroethylene, polytrifluoroethylene, copolymer of terafluoroethylene and hexafluoropropylene, copolymer of vinylidene chloride and vinyl chloride, and copolymer of vinylidene chloride and acrylonitrile. Further, a transparent glass substrate may be used as a support. Furthermore, inorganic material such as SiC, $SiO_2$, SiN, and $Al_2O_3$ may be allowed to deposit by means of the vacuum evaporation or sputtering method to form the protective layer. The thickness of a protective layer is preferably 0.1 to 2,000 μm.

**EXAMPLES**

The present invention will be further described based on examples but embodiments of the invention are by no means limited to these examples.

Preparation of Radiation Image Conversion Panel

Stimulable phosphor layers were prepared according to Examples 1 to 6 and Comparative Examples 1 and 2, as described below. Thus, in Example 1 to 6, using a vacuum deposition apparatus (1), as shown in Fig. 2, a stimulable phosphor (CsBr: 0.0002Eu) was deposited on one side of a support (11) composed of a carbon fiber reinforced sheet to form a stimulable phosphor layer. In each of the stimulable phosphor layers prepared using the vacuum deposition apparatus (1), vacuum deposition was carried out with rotating the support (11); as a result, it was proved that columnar crystal diameters were constant at an equal distance from the,center of the substrate or on each of concentric circles based on the center of the substrate, exhibiting that the columnar crystal diameters were isotropic.

In Comparative Examples 1 and 2, using a vacuum deposition apparatus (2), as shown in Fig. 3, a stimulable phosphor (CsBr: 0.0002Eu) was deposited on one side of the foregoing support to 6 to form a stimulable phosphor layer. In the vacuum deposition apparatus (2), the stimulable phosphor was deposited with transporting the support (21) to form a stimulable phosphor layer. As a result, it was proved that columnar crystal diameters were not constant at an equal distance from the center of the substrate, exhibiting that the columnar crystal diameters were anisotropic.

Example 1

Using the vacuum deposition apparatus (1), raw material of the foregoing phosphor to be deposited was charged into a resistance heating crucible, and the support (11) was set to a rotatable support holder (4) and the distance between the support (11) and an evaporation source (3) was adjusted to 200 mm. Subsequently, the inside of the vacuum deposition apparatus (1) was evacuated and then, argon (Ar) gas was introduced thereto to adjust the degree of vacuum to 0.1 Ps; thereafter, the support (11) was maintained at a temperature of 100 °C, while rotating the support (11) at a rate of 10 rpm. Subsequently, the resistance heating crucible was heated to deposit the stimulable phosphor and deposition was completed when the thickness of the stimulable phosphor layer reached 500 μm. Then, the thus formed stimulable phosphor layer was put into a protective layer package in dry air and sealed to obtain a radiation image conversion panel having a sealed stimulable phosphor layer.

Example 2

Similarly to Example 1, deposition of a stimulable phosphor layer was carried out to obtain a radiation image conversion panel, except that the distance between the support (11) and the evaporation source (3) was adjusted to 300 mm.

Example 3

Similarly to Example 1, deposition of a stimulable phosphor layer was carried out to obtain a radiation image conversion panel, except that the distance between the support (11) and the evaporation source (3) was adjusted to 400 mm.

Example 4

Similarly to Example 1, deposition of a stimulable phosphor layer was carried out to obtain a radiation image conversion panel, except that the distance between the support (11) and the evaporation source (3) was adjusted to 600 mm.

Example 5

Similarly to Example 1, deposition of a stimulable phosphor layer was carried out to obtain a radiation image conversion panel, except that the distance between the support (11) and the evaporation source (3) was adjusted to 800 mm.

Example 6

Similarly to Example 1, deposition of a stimulable phosphor layer was carried out to obtain a radiation image conversion panel, except that the distance between the support (11) and the evaporation source (3) was adjusted to 1000 mm.

Comparative Example 1

Using the vacuum deposition apparatus (2), raw material of the foregoing phosphor to be deposited was charged into a resistance heating crucible, and the support (21) was set to a support holder (14) and the distance between the support (21) and an evaporation source (13) was adjusted to 400 mm, in which an aluminum slit (17) was used. Subsequently, the inside of the vacuum deposition apparatus (2) was evacuated and then, Ar gas was introduced thereto to adjust the degree of vacuum to 0.1 Ps; thereafter, the support (21) was maintained at a temperature of 100 °C, while transporting the support (21) in the direction horizontal to the evaporation source (13) using a support transport mechanism (15) having a transport wire (15a) and guide rail (15b). Subsequently, the resistance heating crucible was heated to deposit the stimulable phosphor and deposition was completed when the thickness of the stimulable phosphor layer reached 500 μm. Then, the thus formed stimulable phosphor layer was put into a protective layer package in dry air and sealed to obtain a radiation image conversion panel having a sealed stimulable phosphor layer.

Comparative Example 2

Similarly to Comparative Example 1, deposition of a stimulable phosphor layer was performed to prepare a radiation image conversion panel, except that the distance between the support (21) and the evaporation source (13) was adjusted to 1000 mm.

The thus obtained radiation image conversion panels were each evaluated in the following manner.

Columnar Crystal Diameter

Of the phosphor layer of each of the radiation image conversion panels, columnar crystal diameters were determined from an electronmicrograph in which at least 100 columnar crystals were included in the field of view. The distribution of columnar crystal diameters was observed and a standard deviation of columnar crystal diameter was calculated. The calculated standard deviation was divided by an average of 100 columnar crystal diameters to determine a coefficient of variation according to the following equation (2) :

$$\text{coefficient of variation} = \text{(standard deviation of}$$

$$\text{columnar crystal diameter)/(average columnar crystal}$$

$$\text{diameter)}.$$

Warping of Panel

Radiation image conversion panels were evaluated with respect to warping of the panel in the following manner. When the respective panels were stood at an angle of 5° against a stainless steel plate exhibiting good straightness, clearance at each of upper edges was measured using a clearance gauge and further rotating the panel by 180°, clearance at each of the remained edges was measured similarly. The maximum value thereof was defined as a warping amount (expressed in mm).

Shock Resistance

After falling a 500 g iron ball from a height of 20 cm onto the respective radiation image conversion panels, visual evaluation thereof was made. Further, the radiation image conversion panels were each exposed to X-rays at a tube voltage of 80 kVp and stimulated with He-Ne laser light (633 nm). The stimulated luminescence emitted from the phosphor layer was detected by a photodetector and converted to electric signals, which were reproduced as an image on an image reproducing apparatus and printed out by an outputting apparatus. The obtained printed images were visually evaluated with respect to shock resistance, based on the following criteria:

A: a uniform image with no crack,
B: no crack was observed and an image quality level of being scarcely noticeable,
C: slight cracks were observed and image deficiency was confirmed, which were a level acceptable in practice,
D: cracks were observed and image deficiency was marked, which were a level unacceptable in practice.

Sensitivity

After exposed to X-rays at a bulb voltage of 80 kVp from the opposite side of the support to the stimulable phosphor layer, the radiation image conversion panels were each stimulated by scanning with He-Ne laser (633 nm) and stimulated emission emitted from the stimulated phosphor layer was detected by a detector (a photomultiplier having spectral sensitivity of S-5) to measure the intensity of luminance. The thus obtained luminance intensity was defined as sensitivity and represented by a relative value, based on the sensitivity of the radiation image conversion panel of Comparative Example 1 being 100.

Unevenness of Sensitivity

After exposed to X-rays at a bulb voltage of 80 kVp from the opposite side of the support to the stimulable phosphor layer, the radiation image conversion panels were each stimulated by scanning with He-Ne laser (633 nm) and stimulated emission emitted from the stimulated phosphor layer was detected by a detector (a photomultiplier having spectral sensitivity of S-5) to measure the intensity of luminance at 25 measuring points arranged at regular intervals on the panel. Unevenness of sensitivity was evaluated from fluctuation of intensity among measuring points. Specifically, unevenness of sensitivity (expressed in %) was represented by the difference between maximum and minimum intensities, divided by an average of intensities at 25 measuring points.
Results based on the foregoing evaluation are shown in Table 1.

Table 1

| Panel | Support Moving Means | Distance[*1] (mm) | Distribution of Columnar Crystal Diameter | Coefficient of Variation[*2] (%) | Warping (mm) | Shock Resistance | Unevenness in Sensitivity | Sensitivity |
|---|---|---|---|---|---|---|---|---|
| Comp. Example 1 | transport | 400 | anisotropy | 61 | 4.0 | D | 40 | 100 |
| Camp. Example 2 | transport | 1000 | anisotropy | 55 | 4.2 | D | 36 | 95 |
| Example 1 | rotation | 200 | isotropy | 52 | 2.8 | C | 30 | 101 |
| Example 2 | rotation | 300 | isotropy | 48 | 1.5 | B | 27 | 100 |
| Example 3 | rotation | 400 | isotropy | 37 | 0.8 | B | 21 | 101 |
| Example 4 | rotation | 600 | isotropy | 25 | 0.7 | B | 16 | 103 |
| Example 5 | rotation | 800 | isotropy | 15 | 0.6 | B | 11 | 104 |
| Example 6 | rotation | 1000 | isotropy | 7 | 0.4 | A | 5 | 105 |

*1: Distance between support and evaporation source

*2: Coefficient of variation of columnar crystal diameters

As apparent from Table 1, radiation image conversion panels of Examples 1 to 6, which exhibited an isotropic distribution of columnar crystal diameters, resulted in reduced warping of the panel and superior shock resistance. Specifically, as the coefficient of variation was decreased, such tendencies became marked. On the contrary, radiation image conversion panels of Comparative Examples 1 and 2, which exhibited an anisotropic distribution of columnar crystal diameters, led to increased warping of the panel and inferior shock resistance. As can be seen from the foregoing, it was preferred that columnar crystal diameters within the plane of the phosphor layer were isotropically distributed outwardly from the center of the substrate. It was further shown that the coefficient of variation of columnar crystals preferably not more than 50%, more preferably not more than 40%, still more preferably not more than 30, further still more preferably not more than 20%, and optimally not more than 10%.

**Claims**

1. A radiation image conversion panel comprising a support having thereon a stimulable phosphor layer comprising columnar crystals of a stimulable phosphor, wherein the columnar crystals .are isotropically distributed on the support outwardly from the center of the support with respect to columnar crystal diameter.

2. The radiation image conversion panel as claimed in claim 1, wherein the columnar crystals exhibit a coefficient of variation of columnar crystal diameters of 50%.

3. The radiation image conversion panel as claimed in claim 1, wherein the columnar crystals exhibit a coefficient of variation of columnar crystal diameters of 40%.

4. The radiation image conversion panel as claimed in claim 1, wherein the columnar crystals exhibit a coefficient of variation of columnar crystal diameters of 30%.

5. The radiation image conversion panel as claimed in claim 1, wherein the columnar crystals exhibit a coefficient of variation of columnar crystal diameters of 20%.

6. The radiation image conversion panel as claimed in claim 1, wherein the columnar crystals exhibit a coefficient of variation of columnar crystal diameters of 10%.

7. The radiation image conversion panel as claimed in any of claims 1 to 6, wherein the stimulable phosphor is represented by the following formula (1):

$$M^1 X \cdot a M^2 X'_2 \cdot b M^3 X''_3 : eA \tag{1}$$

wherein $M^1$ is at least one alkali metal atom selected from the group consisting of Li, Na, K, Rb and Cs; $M^2$ is at least one divalent metal atom selected from the group consisting of Be, Mg, Ca, Sr, Ba, Zn, Cd, Cu and Ni; $M^3$ is at least one trivalent metal atom selected from the group consisting of Sc, Y, La, Ce, Pr, Nd, Pm, Sm, Eu, Gd, Tb, Dy, Ho, Er, Tm, Yb, Lu, Al, Ga and In; X, X' and X'' each are a halogen atom selected from the group consisting of F, Cl, Br and I; A is at least one metal atom selected from the group consisting of Eu, Tb, In, Ce, Tm, Dy, Pr, Ho, Nd, Yb, Er, Gd, Lu, Sm, Y, Tl, Na, Ag, Cu and Mg; a, b and e are respectively $0 \leq a < 0.5$, $0 \leq b < 0.5$ and $0 < e \leq 1.0$.

8. A radiation image conversion panel comprising a support having thereon a stimulable phosphor layer comprising columnar crystals of a stimulable phosphor, wherein the columnar crystals exhibit a coefficient of variation of columnar crystal diameters of 50%.

9. The radiation image conversion panel as claimed in claim 8, wherein the columnar crystals exhibit a coefficient of variation of columnar crystal diameters of 40%.

10. The radiation image conversion panel as claimed in claim 8, wherein the columnar crystals exhibit a coefficient of variation of columnar crystal diameters of 30%.

11. The radiation image conversion panel as claimed in claim 8, wherein the columnar crystals exhibit a coefficient of variation of columnar crystal diameters of 20%.

12. The radiation image conversion panel as claimed in claim 8, wherein the columnar crystals exhibit a coefficient of variation of columnar crystal diameters of 10%.

13. The radiation image conversion panel as claimed in any of claims 8 to 12, wherein the stimulable phosphor is represented by the following formula (1):

$$M^1X \cdot aM^2X'_2 \cdot bM^3X''_3:eA \qquad (1)$$

wherein $M^1$ is at least one alkali metal atom selected from the group consisting of Li, Na, K, Rb and Cs; $M^2$ is at least one divalent metal atom selected from the group consisting of Be, Mg, Ca, Sr, Ba, Zn, Cd, Cu and Ni; $M^3$ is at least one trivalent metal atom selected from the group consisting of Sc, Y, La, Ce, Pr, Nd, Pm, Sm, Eu, Gd, Tb, Dy, Ho, Er, Tm, Yb, Lu, Al, Ga and In; X, X' and X'' each are a halogen atom selected from the group consisting of F, Cl, Br and I; A is at least one metal atom selected from the group consisting of Eu, Tb, In, Ce, Tm, Dy, Pr, Ho, Nd, Yb, Er, Gd, Lu, Sm, Y, Tl, Na, Ag, Cu and Mg; a, b and e are respectively $0 \leq a < 0.5$, $0 \leq b < 0.5$ and $0 < e < 1.0$.

14. A method of preparing a radiation image conversion panel comprising a support having thereon a stimulable phosphor layer, the stimulable phosphor layer comprising columnar crystals of a stimulable phosphor, and the method comprising:

depositing the stimulable phosphor onto the support to form the columnar crystals to form the stimulable phosphor,

wherein the columnar crystals are isotropically distributed on the support outwardly from the center of the support with respect to columnar crystal diameter.

15. The method as claimed in claim 14, wherein a vacuum deposition apparatus comprising a vacuum vessel having a support rotation mechanism and an evaporation source is used and the support is set onto the support rotation mechanism, and depositing is performed while rotating the support.

16. The method as claimed in claim 15, wherein depositing is performed at a distance between the evaporation source and the support of 100 to 1500 mm.

17. The method as claimed in any of claims 14 to 16, wherein the columnar crystals exhibit a coefficient of variation of columnar crystal diameters of 50%.

18. The method as claimed in any of claims 14 to 16, wherein the columnar crystals exhibit a coefficient of variation of columnar crystal diameters of 30%.

19. The method as claimed in any of claims 14 to 16, wherein the columnar crystals exhibit a coefficient of variation of columnar crystal diameters of 10%.

20. The method as claimed in any of claims 14 to 19, wherein the stimulable phosphor is represented by the following formula (1):

$$M^1X \cdot aM^2X'_2 - bM^3X''_3 : eA \qquad (1)$$

wherein $M^1$ is at least one alkali metal atom selected from the group consisting of Li, Na, K, Rb and Cs; $M^2$ is at least one divalent metal atom selected from the group consisting of Be, Mg, Ca, Sr, Ba, Zn, Cd, Cu and Ni; $M^3$ is at least one trivalent metal atom selected from the group consisting of Sc, Y, La, Ce, Pr, Nd, Pm, Sm, Eu, Gd, Tb, Dy, Ho, Er, Tm, Yb, Lu, Al, Ga and In; X, X' and X'' each are a halogen atom selected from the group consisting of F, Cl, Br and I; A is at least one metal atom selected from the group consisting of Eu, Tb, In, Ce, Tm, Dy, Pr, Ho, Nd, Yb, Er, Gd, Lu, Sm, Y, Tl, Na, Ag, Cu and Mg; a, b and e are respectively $0 \leq a < 0.5$, $0 \leq b < 0.5$ and $0 < e < 1.0$.

# FIG. 1

FIG. 2

# FIG. 3

FIG. 4 ( a )

FIG. 4 ( b )

FIG. 4 ( c )